# EUROPEAN PATENT SPECIFICATION

(11) **EP 0 463 942 B1**
(45) Date of publication and mention of the grant of the patent: **24.08.1994**
(21) Application number: 91401670.4
(22) Date of filing: 20.06.1991
(51) Int. Cl.: B62K 19/46, B62J 7/02

(54) **A motor scooter having a trunk device**
Motorroller mit einem Kofferraum
Scooter muni d'un compartiment de rangement

(30) Priority: 22.06.1990 JP 165051/90
(43) Date of publication of application: 02.01.1992
(73) Proprietor: HONDA GIKEN KOGYO KABUSHIKI KAISHA, Minato-ku, Tokyo (JP)
(72) Inventor: Hamada, Kenji, c/o K.K. Honda Gijutsu Kenkyusho, Wako-shi, Saitama (JP); Finger, Dietmar, W-6056 Heusenstamm (DE)
(74) Representative: Poulin, Gérard

(56) References cited:
- EP-A- 0 323 908
- FR-A- 2 604 967

## Description

This invention relates to a motor scooter comprising a trunk device, more particularly a container box provided beneath a seat of the motor scooter.

Lately, there have become increasingly popular motor scooters having container boxes or trunks under their seats. A motor scooter disclosed in Japanese patent application laid-open n° 61-27889 is provided beneath its seat with a trunk having lids thereover at its front and back to accommodate a long article.

However, the trunk disclosed in said Japanese patent application laid-open n° 27889 has its lids left open to accommodate a long article which, therefore, inevitably has its part exposed outside and cannot be protected properly from outdoor harms such as rain.

Therefore, the purpose of the invention is to provide a trunk device for a motor scooter having, at the rear end of its seat, a container box projecting forward to utilize the space over the vehicle floor efficiently and accommodate a long article or a greater number of articles without exposing outside the articles accommodated therein.

To solve the above-described problem, the invention provides a trunk device for a motor scooter, comprising a container box provided at the rear end of its floor, said container box projecting above the said floor in front of the seat, as defined in claim 1.

According to the present invention, a trunk device for a motor scooter is made elongate, extending from the bottom of the vehicle seat upwardly above the vehicle floor, and makes it easy to accommodate articles long in shape.

This invention is explained hereinbelow, by way of example, with reference to the accompanying drawings, in which :
- figure 1 is an outside view of a motor scooter embodying the present invention ;
- figure 2 is a side view of the motor scooter of figure 1, showing its primary parts in cross section ;
- figure 3 is a plane view of the moter scooter of figure 1 ;
- figures 4 and 5 are cross-sectional views taken respectively along lines IV-IV and V-V of figure 2 ;
- figure 6 is a side view similar to figure 2, showing another embodiment of the present invention ;
- figure 7 is a plane view of the motor scooter of figure 6 ; and
- figure 8 is a side view similar to figures 2 and 6, showing a third embodiment of the invention.

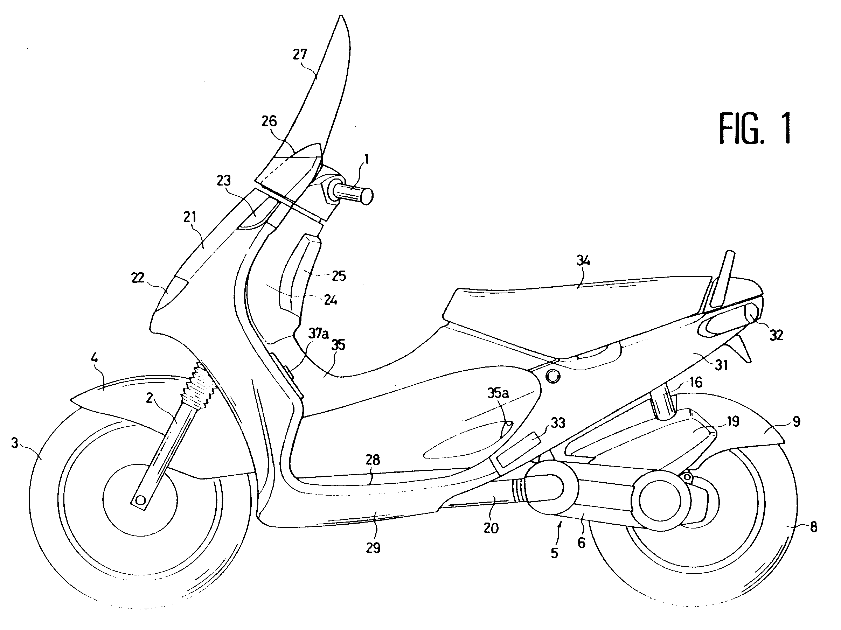

In figures 1 to 3, showing a first embodiment of a motor scooter embodying the present invention, reference numeral 1 designates a handlebar, 2 a front fork , 3 a front wheel, 4 a fender, 5 a power unit, 8 a rear wheel, 9 a rear fender, 11 a vehicle frame, 21 a leg shield.

The vehicle frame 11 of the motor scooter comprises a head pipe 12, a down pipe 13 and right and left rear pipes 14 and 14. The head pipe 12 has manipulatably supported thereto the front fork 2 carrying the front wheel 3 and linked to the handlebar 1.

The power unit 5 has a V-shaped transmission belt casing 6 carrying the rear wheel 8, with an engine cylinder 7 projecting forward. The transmission belt casing 6 is shiftably supported by links 15 and 15 to a cross pipe 14c provided between the rear pipes 14 and 14, in front of the said transmission belt casing 6. Between the rear end of the tranmsission belt casing 6 and the rear pipes 14, there is suspended a dumper 16. Also shown are an evaporator 17, an air cleaner 18, an air cleaner cover 19 and an air circulation duct 20 for cooling inside the transmission belt casing 6.

Covering over the front end of the vehicle frame 11, a leg shield 21 has a head lamp 22 and right and left winker lamps 23 and 23 fitted to the front surface thereof and is provided on its back with an inner trunk 24 having a trunk lid 25. The leg shield has extending upwardly therefrom a handlebar cover 26 which is, in turn, fitted with a windshield 27.

Designated by reference numerals 28 and 28 are right and left vehicle floors continuously extending rearwardly from the bottom of the leg shield 21. There is provided under the vehicle floor 28 an under cover 29 and a rear cover 31 continuously extending rearwardly from the vehicle floors 28 and 28. The rear cover 31 has fitted therein such elements as the left and right winker lamps 32 and 32 and provided along the outer sides of its front a collapsible step 33.

Provided over the rear cover 31 is a tandem seat 34 which, fixed with a hinge 34a, can open inside the rear cover 31.

There is provided a continuous tunnel-shaped cover 35 covering the front end of the rear cover 31 and the rear of tie leg shield 21. Designated with a numeral 35a in the drawings is a cooling air inlet.

A container box or trunk 41 is provided inside the rear cover 31 and the tunnel-shaped cover 35.

The container box 41 is an integrally formed container opening upward and composed of a underseat container box 42, an auxiliary container section 43 provided therebehind and a tunnel-shaped container box 44 extending forward from the underseat container box 42 inside the tunnel-shaped cover 35.

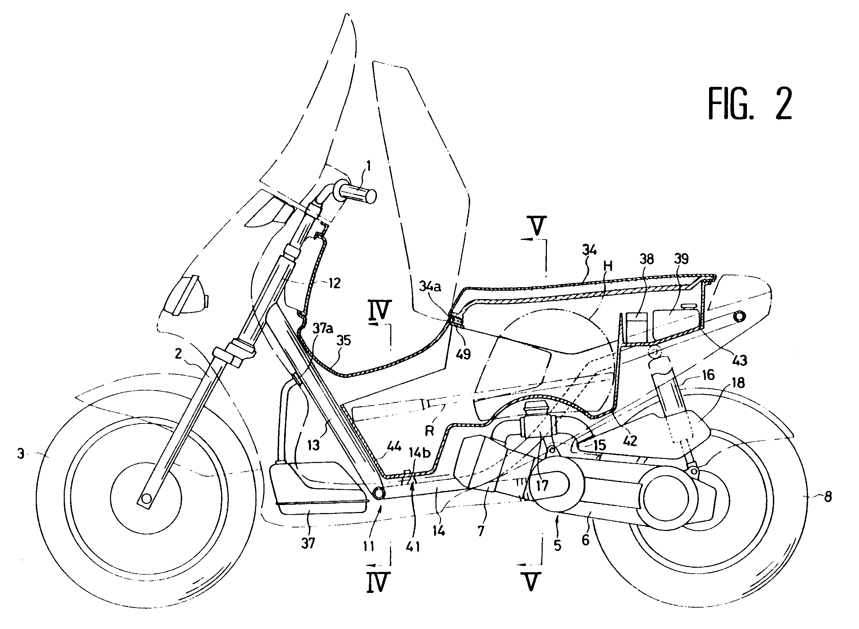

As shown in figure 2, a bottom plate of the underseat container box 42 is formed in a shape to avoid blocking the engine cylinder 7, the evaporator 15 and other vehicle parts. The tunnel-shaped container box 44 extending forward from the underseat container box has a bottom plate stepped down and a front plate shaped to fit around the back of the down pipe 13.

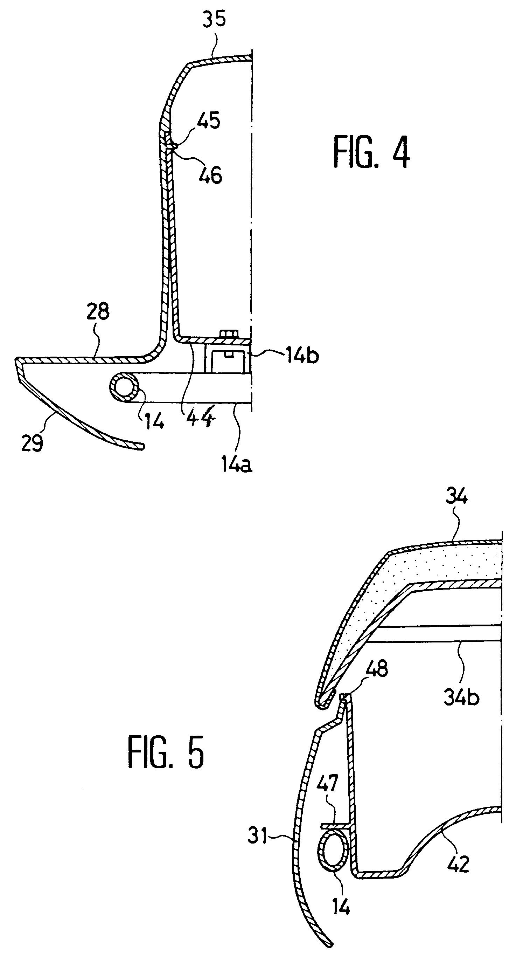

As shown figure 4, the tunnel-shaped container box 44 has its bottom plate connected with bolts and nuts to a bracket 14b over a cross pipe 14a suspended between the right and left rear pipes 14 and 14. The tunnel-shaped cover 35, having on its right and left the sides floors 28 and 28, is fitted to the sides of the tunnel-shaped container box 44 with a pin 45 and a clip 46.

The underseat container box 42, as shown in figure 5, is supported with the rear pipe 14 holding, mounted on its rear end, a securing lid 47 projecting outwardly from the bottom of the container box and the rear cover 31 holding, mounted on its upper edge, an outwardly-bend edge 48 provided along the upper edge of the container box. A cross member 34b for the bottom plate of the seat 34 is also shown in figure 5.

As shown in figure 2, the seat 34 has its front end supported through the hinge element 34a onto a cross member 49 suspended between front and upper portions of the underseat container box 42.

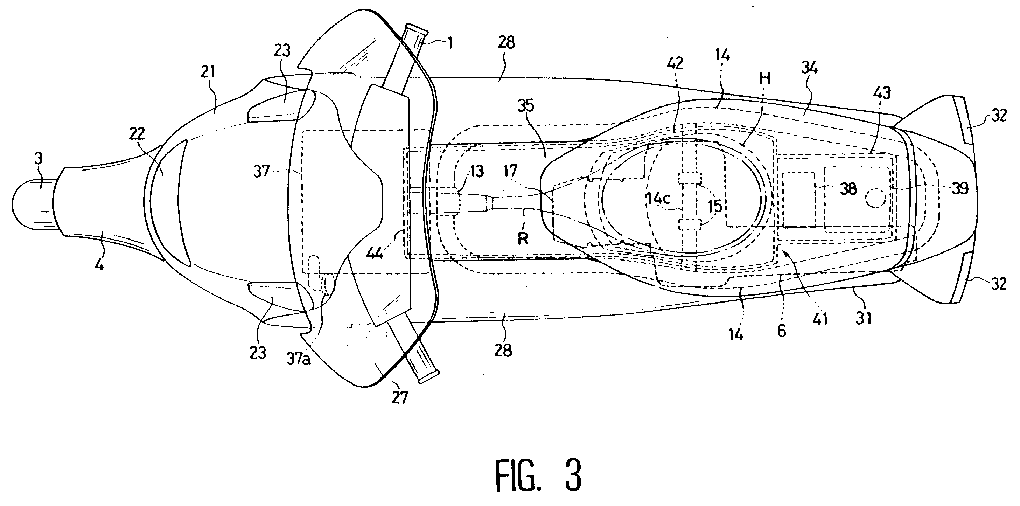

Figures 2 and 3 show a fuel tank 37 provided in front of the down pipe 13, and a battery 38 and an oil tank 39 provided inside the auxiliary container section 43 at the rear end of the trunk 41. A fuel supply mouth 37a for the fuel tank 37 is provided on the leg shield 21.

As shown in figures 2 and 3, a motor scooter of the type described in the above, when its seat is lifted up and the upper surface of the seat cover 31 is opened, allows a crash helmet H to be accommodated into the underseat container box 42 and long articles such as a tennis racket R to be accommodated into the tunnel-shaped container box 44 projecting forwardly from the said underseat container box 42.

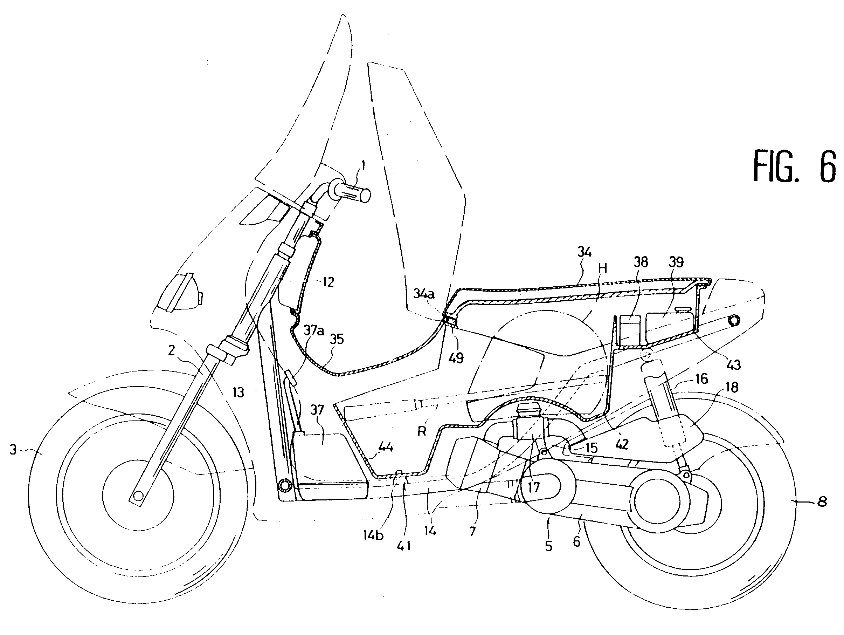

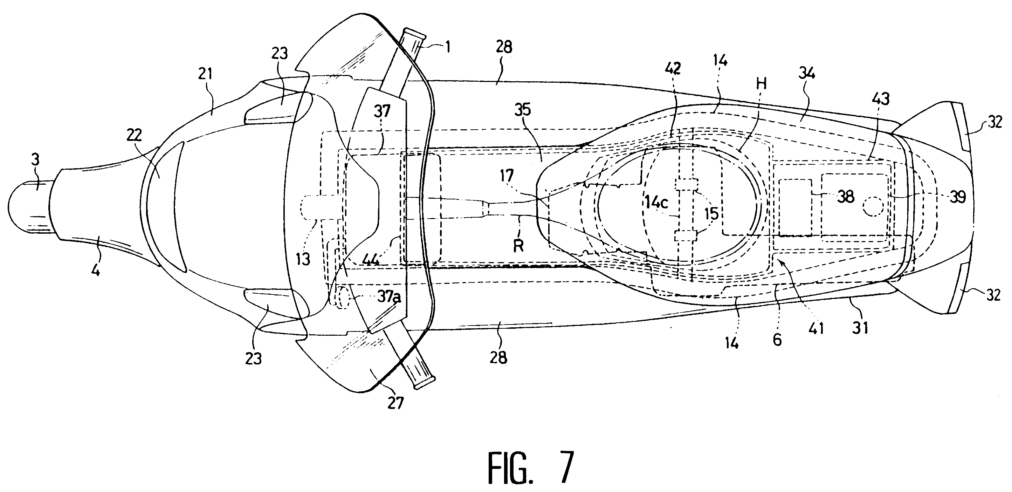

In the above-described embodiment of the invention, the fuel tank 37 is provided in front of the down pipe 13. In another embodiment of the present invention, as shown in figures 6 and 7, the down pipe 13 is provided far apart from the trunk 41, leaving a gap behind the down pipe and in front of the trunk 41 to lodge the fuel tank 37 between the right and left rear pipes 14 and 14. Except this, the embodiment of the invention shown in figures 6 and 7 has the same structure as in the first embodiment of the invention.

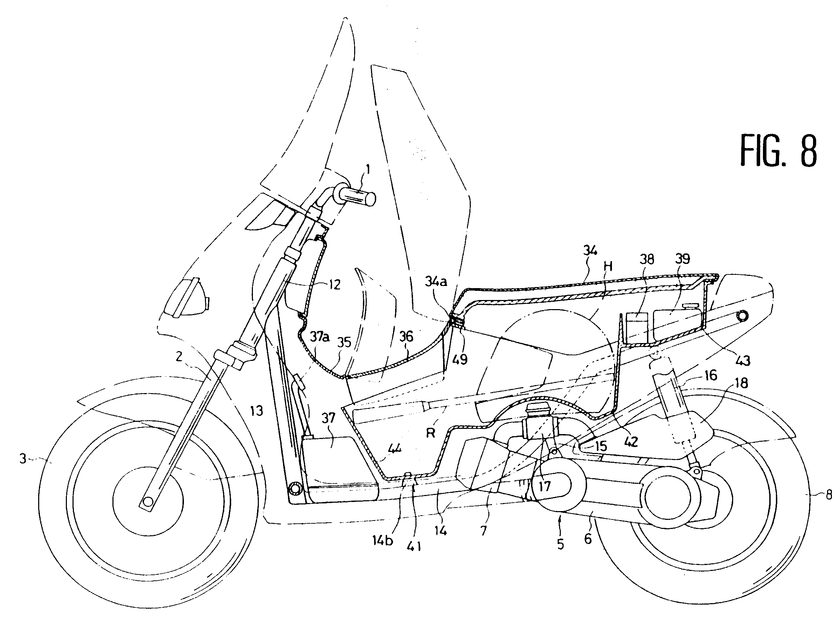

Figure 8 shows a third embodiment of the present invention, in which the tunnel-shaped cover 35 is fitted with a detachable or hinged lid 36. The remainder of the structure is the same as in the other embodiments of the invention.

The employment of the lid 36 over the tunnel-shaped cover 35 makes it possible to put in and out from the tunnel-shaped container box 44, at least, small articles such as gloves without needing to lift up the seat 34.

The embodiments of the present invention as described in the above can be altered and changed in shapes and structures as desired, without affecting and impairing their advantages and intended effects. For instance, the above-described embodiments of the invention show a horizontal engine with its cylinder portion facing forward. However, it is possible to employ a vertical engine having a cylinder facing upward. The fuel tank positioned in front of the trunk in the above-described embodiments can also be provided behind the trunk.

Since an underseat trunk is projected forward over the front floor of a vehicle according to the present invention, its accommodation space can be expanded forwardly, making it possible to accommodate, with an ease, long articles such as a tennis racket without exposing them outside.

## Claims

1. A motor scooter comprising a seat (34) and a container box (41) at the rear end of its floor (28), characterized in that said container box projects above the said floor in front of the seat (34).

2. A motor scooter as claimed in claim 1, characterized in that a fuel tank (37) is provided in front of the container box (41).

3. A motor scooter as claimed in claim 2, characterized in that an inlet (37a) of the fuel tank (37) is provided on a leg shield (21).

4. A motor scooter as claimed in either claim 2 or 3, characterized in that the fuel tank (37) is provided between the container box (41) and a down pipe (13).

5. A motor scooter as claimed in either claim 2 or 3, characterized in that the fuel tank (37) is provided in front of a down pipe (13).

6. A motor scooter as claimed in anyone of the preceding claims, characterized in that an upper cover (35) of the container box (41) at the front end of the seat (34) has a lid (36) free to open and close.

7. A motor scooter as claimed in anyone of the preceding claims, characterized in that a power unit (5) of said motor scooter is a horizontal engine having a cylinder head (7) positioned almost horizontally.

## Patentansprüche

1. Motorroller, der einen Sitz (34) und einen Behälterkasten (41) am hinteren Ende seines Fußbretts (28) umfaßt, **dadurch gekennzeichnet,** daß der Behälterkasten über dem Fußbrett vor den Sitz (34) vorsteht.

2. Motorroller nach Anspruch 1, **dadurch gekennzeichnet,** daß sich ein Kraftstofftank (37) vor dem Behälterkasten (41) befindet.

3. Motorroller nach Anspruch 2, **dadurch gekennzeichnet,** daß ein Einlaß (37a) des Kraftstofftanks (37) an einer Beinverkleidung (21) vorhanden ist.

4. Motorroller nach Anspruch 2 oder 3, **dadurch gekennzeichnet,** daß sich der Kraftstofftank (37) zwischen dem Behälterkasten (41) und einem Fallrohr (13) befindet.

5. Motorroller nach Anspruch 2 oder 3, **dadurch gekennzeichnet,** daß sich der Kraftstofftank (37) vor einem Fallrohr (13) befindet.

6. Motorroller nach einem der vorangehenden Ansprüche, **dadurch gekennzeichnet,** daß eine obere Abdeckung (35) des Behälterkastens (41) am vorderen Ende des Sitzes (34) einen Deckel (36) aufweist, der geöffnet und geschlossen werden kann.

7. Motorroller nach einem der vorangehenden Ansprüche, **dadurch gekennzeichnet,** daß eine Antriebseinheit (5) des Motorrollers ein liegender Motor mit einem Zylinderkopf (7) ist, der fast horizontal angeordnet ist.

## Revendications

1. Scooter comprenant un siège (34) et un coffre à bagages (41) à l'extrémité postérieure de son plancher (28), caractérisé par le fait que ledit coffre à bagages fait saillie au-dessus dudit plancher, à l'avant du siège (34).

2. Scooter selon la revendication 1, caractérisé par le fait qu'un réservoir de carburant (37) est prévu à l'avant du coffre à bagages (41).

3. Scooter selon la revendication 2, caractérisé par le fait qu'une admission (37a) du réservoir de carburant (37) est pratiquée sur un carénage enveloppant (21).

4. Scooter selon l'une des revendications 2 ou 3, caractérisé par le fait que le réservoir de carburant (37) est prévu entre le coffre à bagages (41) et une tubulure descendante (13).

5. Scooter selon l'une des revendications 2 ou 3, caractérisé par le fait que le réservoir de carburant (37) est prévu à l'avant d'une tubulure descendante (13).

6. Scooter selon l'une quelconque des revendications précédentes, caractérisé par le fait qu'un capot supérieur (35) du coffre à bagages (41), à l'extrémité antérieure du siège (34), présente un couvercle (36) pouvant être ouvert et fermé librement.

7. Scooter selon l'une quelconque des revendications précédentes, caractérisé par le fait qu'un groupe propulseur (5) dudit scooter est un moteur horizontal, présentant une culasse de cylindre (7) placée presque horizontalement.
